# EUROPÄISCHE PATENTANMELDUNG

(11) **EP 4 835 397 A1**
(43) Veröffentlichungstag der Anmeldung: **04.11.2026**
(21) Anmeldenummer: 26173372.9
(22) Anmeldetag: 20.04.2026
(51) Int. Cl.: G01B 11/24, G01B 11/245

(54) **VERFAHREN UND VORRICHTUNG ZUM MESSEN EINES WERKSTÜCKS MIT EINEM KOMBINIEREN VON MESSUNGEN EINES ABSTANDSSENSORS IN MEHREREN KONFIGURATIONEN DES ABSTANDSSENSORS**

(30) Priorität: 29.04.2025 DE 102025001492
(71) Anmelder: JENOPTIK Optical Systems GmbH, 07745 Jena (DE)
(72) Erfinder: Schubert, Michael, 07745 Jena (DE); Jacob, Lutz, 07745 Jena (DE); Henkel, Jakob, 07745 Jena (DE)
(74) Vertreter: Waldauf, Alexander

(57) **Zusammenfassung**

Verfahren zum Messen von mindestens einem Merkmal von Form, Lage oder Dimension eines drehbar eingespannten Werkstücks (2), umfassend:

Bereitstellen eines Abstandssensors (8), wobei der Abstandssensor (8) in mindestens einer Richtung in eine Abstandssensorposition verschiebbar und/oder um mindestens eine Achse in einen Abstandssensorwinkel drehbar ist;

Konfigurieren des verschiebbaren und/oder drehbaren Abstandssensors (8) in einer ersten Konfiguration (SC1), wobei die erste Konfiguration (SC1) eine erste Abstandssensorposition und einen ersten Abstandssensorwinkel des Abstandssensors (8) umfasst;

Messen eines ersten Abstands zwischen dem Abstandssensor (8) und einer Oberflächenposition (31) auf der Oberfläche des Werkstücks (2) mit der ersten Konfiguration (SC1) des Abstandssensors (8);

Berechnen eines ersten Koordinatensatzes der Oberflächenposition (31) aus der ersten Konfiguration (SC1) und dem ersten Abstand;

Bestimmen eines ersten Vertrauensniveaus;

Konfigurieren des verschiebbaren und/oder drehbaren Abstandssensors (2) in einer zweiten Konfiguration (SC2), wobei sich die zweite Konfiguration (SC2) von der ersten Konfiguration (SC1) unterscheidet;

Messen eines zweiten Abstands zwischen dem Abstandssensor (8) und der Oberflächenposition (31) auf der Oberfläche des Werkstücks (2) mit der zweiten Konfiguration (SC2) des Abstandssensors (8);

Berechnen eines zweiten Koordinatensatzes der Oberflächenposition (31) aus der zweiten Konfiguration (SC2) und dem zweiten Abstand;

Bestimmen eines zweiten Vertrauensniveaus;

Generieren eines ersten Datensatzes, der das mindestens eine Merkmal von Form, Lage oder Dimension des Werkstücks (2) beschreibt, umfassend einen gemittelten Koordinatensatz der Oberflächenposition (31), wobei ein Berechnen des gemittelten Koordinatensatzes unter Verwendung des ersten Koordinatensatzes, des ersten Vertrauensniveaus, des zweiten Koordinatensatzes und des zweiten Vertrauensniveaus erfolgt.

## Beschreibung

Die Erfindung betrifft ein Verfahren und eine Vorrichtung zum Messen von mindestens einem Merkmal von Form, Lage oder Dimension eines Werkstücks, insbesondere von rotierbaren Maschinenelementen, wie beispielsweise Motor- und Getriebewellen, Schubstangen, Ventilen, Kolben, Schrauben, Turbinenteilen etc.

### Stand der Technik

Für eine genaue Messung von Werkstücken, insbesondere von wellenartigen Werkstücken, haben sich taktile Messverfahren etabliert, bei denen Flächen mit mechanischen Tastelementen angetastet und sehr genau gemessen werden können. Ebenso werden kontaktlose Messverfahren zur Abstandsmessung verwendet, beispielsweise optische Abstandssensoren.

Zur Ergänzung bieten sich optische Messverfahren an, bei denen ein Schattenbild des Werkstücks erzeugt wird, an dem der äußere Umriss gemessen werden kann. Aufgrund der berührungslosen Messung kann das Werkstück schnell erfasst und hochgenau vermessen werden. Ein Wechsel zwischen verschiedenen Messaufgaben ist einfach und schnell möglich. Ein Nachteil des Schattenbilds ist, dass beispielsweise konkave Teilflächen und Hinterschneidungen, die im Schattenbild nicht sichtbar sind, nicht gemessen werden können.

Daher bietet es sich an, das Messverfahren mit Abstandsmessung mittels eines Abstandssensors und das Messverfahren mit Schattenbild zu kombinieren. Durch Rotieren des wellenartigen Werkstücks um seine Längsachse und wiederholtes Abstandsmessen und Aufnehmen von Schattenbildern lassen sich seine Form und Abmessungen komplett erfassen.

In der Patentschrift DE 10 2012 104 008 B3 ist eine Vorrichtung zum Messen von Form und Abmessungen eines rotierbaren wellenartigen Werkstücks offenbart, in der das Messverfahren mit Schattenbild und das Messverfahren mit Abstandsmessung mittels eines Abstandssensors kombiniert ausführbar sind. Die Vorrichtung enthält ein Maschinenbett mit einer entlang des Maschinenbetts angeordneten Linearführung und einem parallel dazu angeordneten Linearführungssystem, eine Werkstückhalterung zur drehbaren Aufnahme des Werkstücks und eine optische Messeinheit mit einem Beleuchtungsmodul und einem Kameramodul zur Aufnahme von Schattenbildern des Werkstücks. Außerdem enthält die Vorrichtung eine zusätzliche mechanische Messeinheit mit einem taktilen Abstandssensor, wobei die mechanische Messeinheit an der optischen Messeinheit fixiert ist und eine Schwenkeinrichtung zum Einschwenken des taktilen Abstandssensor in einer Orthogonalebene zur Rotationsachse des Werkstücks aufweist.

In der Patentanmeldung WO 2022/053929 ist ebenfalls eine Vorrichtung zum Messen von Form und Abmessungen eines rotierbaren wellenartigen Werkstücks offenbart, in der das Messverfahren mit Schattenbild und das Messverfahren mit Abstandsmessung mittels eines Abstandssensors kombiniert ausführbar sind. Der Abstandssensor ist hier als optischer Abstandssensor ausgebildet. Der Abstandssensor ist verschiebbar und rotierbar an einer Halterung angebracht. So kann der Abstandssensor in einen geeigneten Winkelbereich zur Oberfläche eines zu messenden Bereichs des Werkstücks ausgerichtet werden, beispielsweise auf die Flanken eines Zahns eines Zahnrads.

### Nachteile des Stands der Technik

Die Zuverlässigkeit der Abstandsmessung mit dem Abstandssensor hängt von der Ausrichtung und/oder dem Abstand des Abstandssensors zur Oberfläche eines zu messenden Bereichs des Werkstücks ab. Die aus dem Stand der Technik bekannten Verfahren zum Messen von Form und Abmessungen eines rotierbaren Werkstücks offenbaren keine Verfahrensschritte zur Kontrolle, wie zuverlässig die Abstandsmessung ist. Sie offenbaren auch keine Verfahrensschritte, um nötigenfalls die Zuverlässigkeit der Abstandsmessung durch eine optimierte Ausrichtung und/oder einem optimierten Abstand des Abstandssensors zu verbessern. Somit sind die gemessenen Daten von Form und Abmessungen des Werkstücks nicht zuverlässig.

### Aufgabe der Erfindung

Es ist daher Aufgabe der Erfindung, ein Verfahren zum Messen von mindestens einem Merkmal von Form, Lage oder Dimension eines Werkstücks bereitzustellen, in dem die Zuverlässigkeit von Abstandsmessungen optimiert wird, die optimierte Abstandsmessung in die Berechnung von Form, Lage oder Dimension des Werkstücks eingeht und somit ein zuverlässiger Datensatz von Form, Lage oder Dimension des Werkstücks erzeugt wird.

### Erfindungsgemäße Lösung

Die Aufgabe der Erfindung wird mit einem Verfahren gemäß Anspruch 1 gelöst.

### Beschreibung

Das erfindungsgemäße Verfahren zum Messen von mindestens einem Merkmal von Form, Lage oder Dimension eines drehbar eingespannten Werkstücks umfasst:
- Bereitstellen eines Abstandssensors, wobei der Abstandssensor in mindestens einer Richtung in eine Abstandssensorposition verschiebbar und/oder um mindestens eine Achse in einen Abstandssensorwinkel drehbar ist;
- Konfigurieren des verschiebbaren und/oder drehbaren Abstandssensors in einer ersten Konfiguration, wobei die erste Konfiguration eine erste Abstandssensorposition und einen ersten Abstandssensorwinkel des Abstandssensors umfasst;
- Messen eines ersten Abstands zwischen dem Abstandssensor und einer Oberflächenposition auf der Oberfläche des Werkstücks mit der ersten Konfiguration des Abstandssensors;
- Berechnen eines ersten Koordinatensatzes der Oberflächenposition aus der ersten Konfiguration und dem ersten Abstand;
- Bestimmen eines ersten Vertrauensniveaus;
- Konfigurieren des verschiebbaren und/oder drehbaren Abstandssensors in einer zweiten Konfiguration, wobei die zweite Konfiguration eine zweite Abstandssensorposition und einen zweiten Abstandssensorwinkel des Abstandssensors umfasst und wobei sich die zweite Konfiguration von der ersten Konfiguration unterscheidet;
- Messen eines zweiten Abstands zwischen dem Abstandssensor und der Oberflächenposition auf der Oberfläche des Werkstücks mit der zweiten Konfiguration des Abstandssensors;
- Berechnen eines zweiten Koordinatensatzes der Oberflächenposition aus der zweiten Konfiguration und dem zweiten Abstand;
- Bestimmen eines zweiten Vertrauensniveaus;
- Generieren eines ersten Datensatzes, der das mindestens eine Merkmal von Form, Lage oder Dimension des Werkstücks beschreibt, umfassend einen gemittelten Koordinatensatz der Oberflächenposition,
wobei ein Berechnen des gemittelten Koordinatensatzes unter Verwendung des ersten Koordinatensatzes, des ersten Vertrauensniveaus, des zweiten Koordinatensatzes und des zweiten Vertrauensniveaus erfolgt.

Das mindestens eine Merkmal von Form, Lage oder Dimension des Werkstücks kann insbesondere ein quantitatives Merkmal sein. Das mindestens eine Merkmal kann beispielsweise ein Durchmesser des Werkstücks oder eine Koordinate der Oberflächenposition sein. Die Oberflächenposition kann beispielsweise ein Zahn eines Zahnrads, das auf einer Welle des Werkstücks angebracht ist, sein. Das Werkstück kann insbesondere ein wellenartiges Werkstück sein.

Das erfindungsgemäße Verfahren kann zusätzlich umfassen:
- Beleuchten des Werkstücks mit einer Beleuchtungseinheit;
- mindestens einfaches Aufnehmen eines von der Beleuchtungseinheit erzeugten Schattenbilds des Werkstücks mit einer Sensoreinheit;
- Generieren eines zweiten Datensatzes aus dem mindestens einfachen Aufnehmen des Schattenbilds;
- Kombinieren des ersten Datensatzes und des zweiten Datensatzes zu einem dritten Datensatz, wobei der dritte Datensatz das mindestens eine Merkmal von Form, Lage oder Dimension des Werkstücks beschreibt.

Der Abstandssensor ist auf einen Träger angebracht. Der Abstandssensor kann ein taktiler Abstandssensor sein, der beispielsweise mit einer Prüfnadel den Abstand zwischen dem Abstandssensor und einer

Oberflächenposition auf der Oberfläche des Werkstücks misst. Der Abstandssensor kann ein optischer Abstandssensor sein, der optisch den Abstand zwischen dem Abstandssensor und einer Oberflächenposition auf der Oberfläche des Werkstücks misst. Der optische Abstandssensor kann beispielsweise ein Abstandssensor nach dem CCS-Prinzip sein, d.h. ein konfokaler chromatischer Abstandssensor.

Die optionale Beleuchtungseinheit und die optionale Sensoreinheit können einander gegenüberliegend ebenfalls auf diesem Träger angebracht sein. Der Träger kann U-förmig sein und das Werkstück umgreifen.

Im erfindungsgemäßen Verfahren können mit dem Abstandssensor ein Abstand und ein Vertrauensniveau des Abstands bestimmt werden. Das Vertrauensniveau des gemessenen Abstands zwischen dem Abstandssensor und der Oberflächenposition auf der Oberfläche des Werkstücks hängt von der Messunsicherheit beim Messen des Abstands ab. Das Vertrauensniveau ist ein Maß für die Zuverlässigkeit des gemessenen Abstands. Das Vertrauensniveau nimmt ab, wenn die Messunsicherheit zunimmt. Ein gemessener Abstand mit hoher Messunsicherheit hat ein geringes Vertrauensniveau. Das Vertrauensniveau kann reziprok zur Messunsicherheit sein. Das Vertrauensniveau kann im Abstandssensor während des Durchführens der Messung bestimmt werden, beispielsweise aus dem Messrauschen. Das Vertrauensniveau kann auch aus einer vorab erstellten Tabelle bestimmt werden, in die beispielsweise der Winkel eingeht, unter dem die Oberflächenposition auf der Oberfläche des Werkstücks gemessen wird. In die vorab erstellte Tabelle kann auch der Abstand zwischen dem Abstandssensor und der Oberflächenposition eingehen und/oder die Beschaffenheit der Oberfläche, beispielsweise matt oder glänzend.

Der Abstandssensor ist in mindestens einer Richtung in eine Abstandssensorposition verschiebbar und/oder um mindestens eine Achse in einen Abstandssensorwinkel drehbar.

Der Abstandssensor kann in verschiedenen Konfigurationen konfiguriert werden. Eine Konfiguration kann beispielsweise eine Abstandssensorposition und einen Abstandssensorwinkel umfassen. Der Abstandssensorwinkel kann eine oder mehrere Winkelkoordinaten umfassen, beispielsweise eine horizontale Abstandssensorwinkelkoordinate und eine vertikale Abstandssensorwinkelkoordinate. Vorteilhaft kann es sein, nur eine Winkelkoordinate, beispielsweise eine horizontale, vorzusehen, weil dann nur eine Abstandssensordrehachse erforderlich ist. Die horizontale Abstandssensorwinkelkoordinate kann eine Winkelkoordinate bezüglich einer Abstandssensordrehachse parallel zur Drehachse des Werkstücks ein. Der Abstandssensor wird in einer ersten Konfiguration konfiguriert, wobei in der ersten Konfiguration eine erste Abstandssensorposition und ein erster Abstandssensorwinkel des Abstandssensors eingestellt werden. **In** dieser ersten Konfiguration wird ein erster Abstand zwischen dem Abstandssensor und der Oberflächenposition auf der Oberfläche des Werkstücks gemessen. Aus der ersten Abstandssensorposition und dem ersten Abstandssensorwinkel der ersten Konfiguration sowie dem ersten Abstand wird ein erster Koordinatensatz der Oberflächenposition berechnet. Der erste Koordinatensatz kann die Komponenten x, y und z der Oberflächenposition umfassen. Ein erstes Vertrauensniveau wird bestimmt. Das erste Vertrauensniveau ist ein Maß für die Zuverlässigkeit des gemessenen ersten Abstands. Das erste Vertrauensniveau kann reziprok zur Messunsicherheit beim Messen des ersten Abstands sein.

Anschließend wird der Abstandssensor in einer zweiten Konfiguration konfiguriert, wobei in der zweiten Konfiguration eine zweite Abstandssensorposition und/oder ein zweiter Abstandssensorwinkel des Abstandssensors eingestellt werden. Die zweite Konfiguration unterscheidet sich in mindestens Abstandssensorposition und/oder Abstandssensorwinkel von der ersten Konfiguration. In der zweiten Konfiguration wird ein zweiter Abstand zwischen dem Abstandssensor und der Oberflächenposition auf der Oberfläche des Werkstücks gemessen, wobei die Oberflächenposition dieselbe wie in der ersten Konfiguration ist. Aus der zweiten Abstandssensorposition und dem zweiten Abstandssensorwinkel der zweiten Konfiguration sowie dem zweiten Abstand wird ein zweiter Koordinatensatz der Oberflächenposition berechnet. Der zweite Koordinatensatz kann die Komponenten x, y und z der Oberflächenposition umfassen. Ein zweites Vertrauensniveau wird bestimmt. Das zweite Vertrauensniveau ist ein Maß für die Zuverlässigkeit des gemessenen zweiten Abstands. Das zweite Vertrauensniveau kann reziprok zur Messunsicherheit beim Messen des zweiten Abstands sein.

Somit liegen zwei Koordinatensätze derselben Oberflächenposition vor. Im erfindungsgemäßen Verfahren umfasst der ersten Datensatz einen gemittelten Koordinatensatz. Der gemittelte Koordinatensatz kann als ein gewichteter Mittelwert von erstem Koordinatensatz und zweitem Koordinatensatz berechnet werden, wobei in das Berechnen des gewichteten Mittelwerts das erste Vertrauensniveau und das zweite Vertrauensniveau als jeweiliger Wichtungsfaktor eingehen.

Der gemittelte Koordinatensatz CS kann wie folgt als ein gewichteter Mittelwert berechnet werden:
CS.x = ( CS1.x * CL1 + CS2.x * CL2 ) / ( CL1 + CL2 )
CS.y = ( CS1.y * CL1 + CS2.y * CL2 ) / ( CL1 + CL2 )
CS.z = ( CS1.z * CL1 + CS2.z * CL2 ) / ( CL1 + CL2 ).

Hierbei sind:
- CS.x, CS.y, CS.z : Komponente x, y, z des gemittelten Koordinatensatzes CS
- CS1.x, CS1.y, CS1.z : Komponente x, y, z des ersten Koordinatensatzes
- CL1 : Vertrauensniveau der ersten Konfiguration
- CS2.x, CS2.y, CS2.z : Komponente x, y, z des zweiten Koordinatensatzes
- CL2 : Vertrauensniveau der zweiten Konfiguration

Als eine mögliche Alternative kann der gemittelte Koordinatensatz CS sein:
- entweder der erste Koordinatensatz CS1, wenn das Vertrauensniveau CL1 der ersten Konfiguration größer als das Vertrauensniveau CL2 der zweiten Konfiguration ist,
- oder der zweite Koordinatensatz CS2, wenn das Vertrauensniveau CL2 der zweiten Konfiguration größer als das Vertrauensniveau CL1 der ersten Konfiguration ist.

Der gemittelte Koordinatensatz geht in den ersten Datensatz ein. Der erste Datensatz beschreibt das mindestens eine Merkmal von Form, Lage oder Dimension des Werkstücks.

Im erfindungsgemäßen Verfahren kann der Abstandssensor in einer weiteren Konfiguration konfiguriert werden, wobei in der weiteren Konfiguration eine weitere Abstandssensorposition und/oder ein weiterer Abstandssensorwinkel des Abstandssensors eingestellt werden. In dieser weiteren Konfiguration kann ein weiterer Abstand zwischen dem Abstandssensor und der Oberflächenposition auf der Oberfläche des Werkstücks gemessen werden, wobei die Oberflächenposition dieselbe wie in der ersten und zweiten Konfiguration ist. Aus der weiteren Abstandssensorposition und dem weiteren Abstandssensorwinkel der weiteren Konfiguration sowie dem weiteren Abstand kann ein weiterer Koordinatensatz der Oberflächenposition berechnet werden. Der weitere Koordinatensatz kann die Komponenten x, y und z der Oberflächenposition umfassen. Ein weiteres Vertrauensniveau kann bestimmt werden. Das weitere Vertrauensniveau kann ein Maß für die Zuverlässigkeit des gemessenen weiteren Abstands sein. Das weitere Vertrauensniveau kann reziprok zur Messunsicherheit beim Messen des weiteren Abstands sein. Der gemittelte Koordinatensatz kann als ein gewichteter Mittelwert von erstem Koordinatensatz, zweitem Koordinatensatz und dem weiteren Koordinatensatz berechnet werden, wobei in das Berechnen des gewichteten Mittelwerts das erste Vertrauensniveau, das zweite Vertrauensniveau und das weitere Vertrauensniveau als jeweiliger Wichtungsfaktor eingehen. Der erste Datensatz kann unter zusätzlicher Berücksichtigung des weiteren Koordinatensatzes und des weiteren Vertrauensniveaus berechnet werden. Der erste Datensatz kann den gemittelten Koordinatensatz umfassen.

Im erfindungsgemäßen Verfahren können die jeweiligen Verfahrensschritte für mindestens eine weitere Oberflächenposition auf der Oberfläche des Werkstücks wiederholt werden. Dadurch können weitere Merkmale von Form, Lage oder Dimension des Werkstücks gemessen werden.

Das Konfigurieren des Abstandssensors in mindestens einer weiteren Konfiguration und das Ausführen der jeweiligen erfindungsgemäßen Verfahrensschritte für mindestens eine weitere Oberflächenposition können in unterschiedlicher Reihenfolge ausgeführt werden.

Reihenfolge 1:
- Selektieren einer ersten Oberflächenposition
   ∘ Ausführen der Verfahrensschritte in der ersten Konfiguration des Abstandssensors
   ∘ Ausführen der Verfahrensschritte in der zweiten Konfiguration des Abstandssensors
   ∘ Optionales jeweiliges Ausführen der Verfahrensschritte in mindestens einer weiteren Konfiguration des Abstandssensors
- Selektieren einer zweiten Oberflächenposition
   ∘ Ausführen der Verfahrensschritte in der ersten Konfiguration des Abstandssensors
   ∘ Ausführen der Verfahrensschritte in der zweiten Konfiguration des Abstandssensors
   ∘ Optionales jeweiliges Ausführen der Verfahrensschritte in mindestens einer weiteren Konfiguration des Abstandssensors

Reihenfolge 2:
• Konfigurieren des Abstandssensors in der ersten Konfiguration
   ∘ Selektieren einer ersten Oberflächenposition und Ausführen der Verfahrensschritte für die erste Oberflächenposition
   ∘ Selektieren einer zweiten Oberflächenposition und Ausführen der Verfahrensschritte für die zweite Oberflächenposition
   ∘ Optionales Selektieren mindestens einer weiteren Oberflächenposition und jeweiliges Ausführen der Verfahrensschritte für die jeweilige Oberflächenposition
• Konfigurieren des Abstandssensors in der zweiten Konfiguration
   ∘ Selektieren einer ersten Oberflächenposition und Ausführen der Verfahrensschritte für die erste Oberflächenposition
   ∘ Selektieren einer zweiten Oberflächenposition und Ausführen der Verfahrensschritte für die zweite Oberflächenposition
   ∘ Optionales Selektieren mindestens einer weiteren Oberflächenposition und jeweiliges Ausführen der Verfahrensschritte für die jeweilige Oberflächenposition

In Reihenfolge 1 werden nach Selektieren einer Oberflächenposition zuerst die jeweiligen erfindungsgemäßen Verfahrensschritte für alle Konfigurationen des Abstandssensors für diese Oberflächenposition ausgeführt bevor die nächste Oberfläche selektiert wird und dann die jeweiligen erfindungsgemäßen Verfahrensschritte für alle Konfigurationen des Abstandssensors für diese nächste Oberflächenposition ausgeführt werden. In Reihenfolge 2 werden nach Konfigurieren des Abstandssensors in einer Konfiguration zuerst alle Oberflächenpositionen selektiert und jeweils die erfindungsgemäßen Verfahrensschritte für jede der Oberflächenposition ausgeführt bevor der Abstandssensor in der nächsten Konfiguration konfiguriert wird.

Im erfindungsgemäßen Verfahren kann der Abstandssensor eine kontaktlose Messung des Abstands, insbesondere eine optische Messung des Abstands, oder eine taktile Messung des Abstands ausführen. Eine optische Messung des Abstands kann nach dem CCS-Prinzip erfolgen, d.h. nach dem Prinzip eines konfokalen chromatischen Abstandssensors. Ein konfokaler chromatischer Abstandssensor nach dem CCS-Prinzip ist vorteilhaft aufgrund der hohen Genauigkeit, kurzen Messzeit und geringen Größe des Abstandssensors. Eine optische Messung des Abstands kann über eine Laufzeitmessung des Lichts erfolgen. Eine optische Messung kann auch mit einem Laserentfernungsmesser erfolgen. Dabei kann der Abstand aus einer Verschiebung der Phasenlage einer Amplitudenmodulation der Laserstrahlung zwischen dem ausgesendeten und empfangenen Laserstrahl bestimmt werden, um eine bessere Auflösung zu erreichen. Eine kontaktlose Messung des Abstands kann auch über Messung der Laufzeit eines Schallsignals oder über einen Druckluftpuls erfolgen. Im letzteren Fall kann ein gemessener Staudruck in einen Abstand umgerechnet werden.

Das erfindungsgemäße Verfahren kann zusätzlich ein Beleuchten des Werkstücks mit einer Beleuchtungseinheit und ein Aufnehmen eines Schattenbilds des Werkstücks mit einer Sensoreinheit umfassen. Die Sensoreinheit, beispielsweise eine flächige CCD-Kamera oder eine Zeilenkamera, befindet sich auf der Seite des Werkstücks, die gegenüber der Beleuchtungseinheit liegt. Vorteilhaft kann die Beleuchtung mit parallelem Licht erfolgen. Dann kann ein besonders genaues Schattenbild aufgenommen werden. Alternativ kann die Beleuchtung mit einer Punklichtquelle erfolgen. Dann kann das Schattenbild abhängig von der Position der Beleuchtungseinheit und der Aufnahmeebene der Sensoreinheit sein.

Während des Beleuchtens des Werkstücks mit der Beleuchtungseinheit kann das erzeugte Schattenbild des Werkstücks mit der Sensoreinheit in einer Aufnahme aufgenommen werden. Aus dieser Aufnahme kann ein zweiter Datensatz generiert werden. Der zweite Datensatz kann mindestens ein Merkmal von Form, Lage oder Dimension des Werkstücks umfassen, beispielsweise einen Durchmesser des Werkstücks. Der erste Datensatz und der zweite Datensatz können zu einem dritten Datensatz kombiniert werden, wobei der dritte Datensatz das mindestens eine Merkmal von Form, Lage oder Dimension des Werkstücks beschreibt.

Im erfindungsgemäßen Verfahren kann das Werkstück um eine Drehachse gedreht werden. Bei einem wellenartigen Werkstück ist die Drehachse vorteilhafterweise entlang der langen Richtung des wellenartigen Werkstücks. Ebenso kann der Abstandssensor in einer Richtung entlang der Drehachse verschoben werden. Ebenso können die Beleuchtungseinheit und/oder die Sensoreinheit in einer Richtung entlang der Drehachse verschoben werden. Dadurch können weitere Merkmale von Form, Lage oder Dimension des Werkstücks gemessen werden.

Im erfindungsgemäßen Verfahren kann der erste Datensatz insbesondere mindestens ein Merkmal über Form, Lage oder Dimension des Werkstücks enthalten, das in dem aus dem mindestens einen Schattenbild generierten zweiten Datensatz nicht enthalten ist. Dies kann ein Merkmal über Form, Lage oder Dimension von konkaven Teilflächen und/oder Hinterschneidungen sein.

Anhand einer Referenzposition kann im erfindungsgemäßen Verfahren ein Abgleich eines ersten Koordinatensystems des verschiebbaren und/oder drehbaren Abstandssensors und eines zweiten Koordinatensystems der Sensoreinheit erfolgen. Die Referenzposition ist eine Oberflächenposition auf der Oberfläche des Werkstücks, deren Koordinatensatz unter Verwendung sowohl des Abstandssensors als auch der Sensoreinheit bestimmbar ist. Die Referenzposition kann beispielsweise eine an dem Werkstück angebrachte Spitze oder eine Oberflächenposition auf einem an dem Werkstück angebrachten Ring sein. Die Referenzposition kann als die Oberflächenposition selektiert werden, und die Referenzposition kann als Schattenbild von der Sensoreinheit aufgenommenen werden. Der erste Datensatz kann unter Verwendung des Abstandssensors im erfindungsgemäßen Verfahren generiert werden, wobei der erste Datensatz einen Koordinatensatz der Referenzposition im ersten Koordinatensystem enthält. Der zweite Datensatz kann unter Verwendung der Sensoreinheit im erfindungsgemäßen Verfahren generiert werden, wobei der zweite Datensatz einen Koordinatensatz der Referenzposition im zweiten Koordinatensystem enthält. Aus der Kombination des ersten Datensatzes und des zweiten Datensatzes im dritten Datensatz kann somit eine Relation von Abstandssensor und Sensoreinheit berechnet werden. Diese Relation kann beispielsweise ein Versatz und/oder eine Verdrehung zwischen dem ersten Koordinatensystem und dem zweiten Koordinatensystem sein.

Auf einer Steuereinheit, die als Steuer- und Auswerteeinheit ausgebildet sein kann, und/oder einem Computer kann erfolgen:
- das Konfigurieren des Abstandsensors,
- ein Aufnehmen und/oder Verarbeiten von Daten des Messens des ersten Abstands und des zweiten Abstands,
- das Berechnen des ersten Koordinatensatzes und des zweiten Koordinatensatzes,
- das Bestimmen des ersten Vertrauensniveaus und des zweiten Vertrauensniveaus,
- das Generieren des ersten Datensatzes und/oder des zweiten Datensatzes,
- das Berechnen des gemittelten Koordinatensatzes,
- und/oder das Generieren des zweiten Datensatzes aus dem mindestens einfachen Aufnehmen des Schattenbilds,
- und/oder das Kombinieren des ersten Datensatzes und des zweiten Datensatzes zu dem dritten Datensatz.

Eine erfindungsgemäße Vorrichtung zum Messen von mindestens einem Merkmal von Form, Lage oder Dimension eines drehbar eingespannten Werkstücks umfasst einen verschiebbaren und/oder drehbaren Abstandssensor und eine Steuereinheit, auf der das erfindungsgemäße Verfahren ausführbar ist. Die erfindungsgemäße Vorrichtung kann eine Beleuchtungseinheit und eine Sensoreinheit umfassen.

### Figuren

Nachfolgend wird die Erfindung anhand von Ausführungsbeispielen näher erläutert. Die Figuren zeigen:
Fig. 1 eine Vorrichtung zum Messen von Form, Lage oder Dimension des Werkstücks, auf der das erfindungsgemäße Verfahren ausführbar ist;
Fig. 2 eine Ansicht der Verschiebe- und Dreheinheit und des Abstandssensors;
Fig. 3 (a), (b), (c) verschiedene Konfigurationen der Verschiebe- und Dreheinheit zur Messung eines Abstands mit dem Abstandssensor;
Fig. 4 einen Ablaufplan des erfindungsgemäßen Verfahrens;
Fig. 5 einen weiteren Ablaufplan des erfindungsgemäßen Verfahrens.

### Ausführungsbeispiele

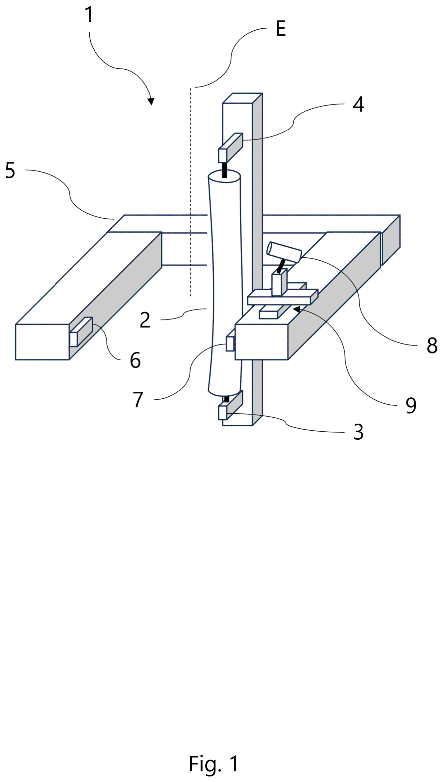

Fig. 1 zeigt eine Vorrichtung 1 zum Messen von Form, Lage oder Dimension eines Werkstücks 2, auf der das erfindungsgemäße Verfahren ausführbar ist. Das in Fig. 1 gezeigte Werkstück 2 ist ein wellenartiges Werkstück. Das Werkstück 2 ist zwischen zwei Halterungen 3, 4 drehbar eingespannt, wobei die Drehung um eine Achse parallel zu einer Richtung E erfolgt. Alternativ kann das Werkstück 2 auch nur in einer Halterung drehbar eingespannt sein. Ein U-förmiger Träger 5 umgreift das Werkstück 2. Auf dem Träger 5 sind eine Sensoreinheit 6 und eine Beleuchtungseinheit 7 angebracht. Der Träger 5 ist entlang der Richtung E verschiebbar. Die Sensoreinheit 6, beispielsweise eine flächige CCD-Kamera oder eine Zeilenkamera, befindet sich auf der Seite des Werkstücks 2, die gegenüber der Beleuchtungseinheit 7 liegt. Ein Abstandssensor 8 ist auf einer Verschiebe- und Dreheinheit 9 angebracht.

Zum Ausführen des erfindungsgemäßen Verfahrens nach Anspruch 1 sind die Sensoreinheit 6 und die Beleuchtungseinheit 7 nicht erforderlich.

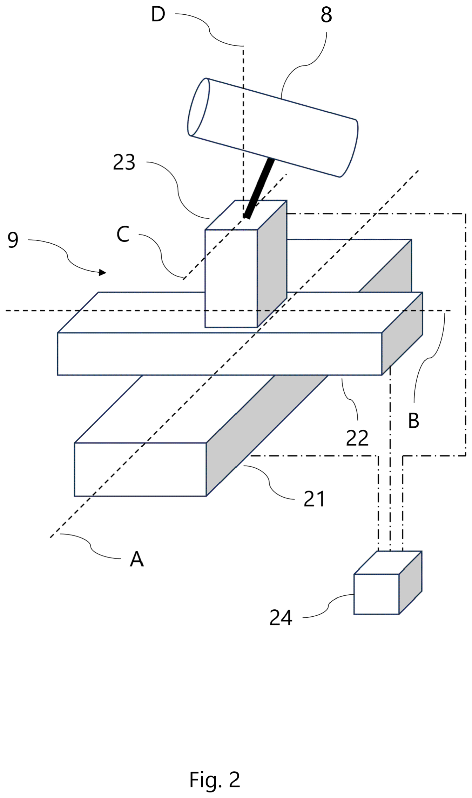

Fig. 2 zeigt die Verschiebe- und Dreheinheit 9 mit dem angebrachten Abstandssensor 8. Die Verschiebe- und Dreheinheit 9 umfasst ein Verschiebeelement 21, ein Verschiebeelement 22 und ein Drehelement 23. Das Verschiebeelement 22 ist auf dem Verschiebeelement 21 angebracht und entlang der Richtung A verschiebbar. Das Verschiebeelement 22 ist im Wesentlichen senkrecht zur Richtung A angebracht. Das Drehelement 23 ist auf dem Verschiebeelement 22 angebracht und entlang der Richtung B verschiebbar. Richtung A und Richtung B stehen im Wesentlichen senkrecht zueinander und auch im Wesentlichen senkrecht zur Richtung E. Der Abstandssensor 8 ist auf dem Drehelement 23 angebracht und um die Achse C und die Achse D drehbar. Die Achse C ist im Wesentlichen parallel zur Richtung A. Die Achse D ist im Wesentlichen parallel zur Richtung E. Somit ist der Abstandssensor 8 entlang Richtung A und Richtung B verschiebbar und um Achse C und Achse D drehbar. Verschiebeelement 21, Verschiebeelement 22 und Drehelement 23 werden von einer Steuereinheit 24 angesteuert.

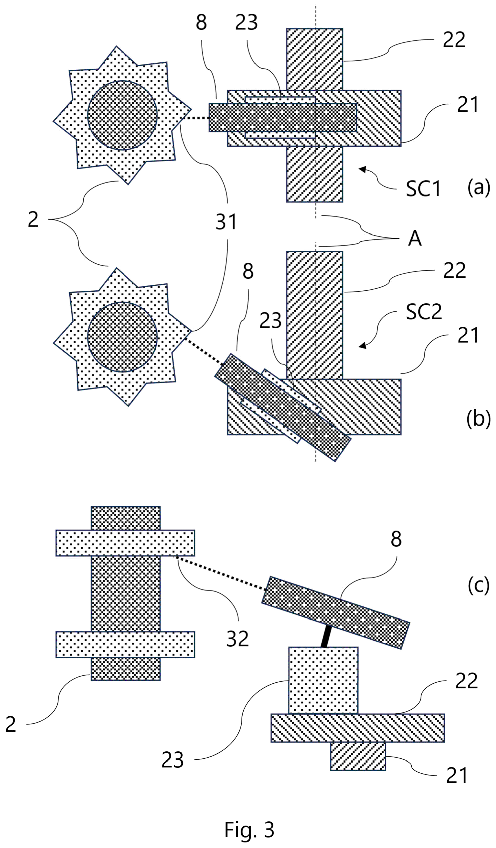

Fig. 3 zeigt beispielhaft, wie der Abstandssensor 8 mit der Verschiebe- und Dreheinheit 9 ausgerichtet wird, um eine zuverlässige Abstandsmessung mit dem Abstandssensor 8 zu gewährleisten. Fig. 3 (a) und Fig. 3 (b) zeigen einen Blick von oben auf das Werkstück 2 und den Abstandssensor 8, d.h. die Blickrichtung ist entlang der Richtung E. Die gestrichelte Linie zwischen dem Abstandssensor 8 und dem Werkstück 2 zeigt die Richtung an, entlang der ein Abstand zwischen dem Abstandssensor 8 und dem Werkstück 2 gemessen wird. Entlang der gestrichelten Linie kann ein Messstrahl eines optischen Abstandssensors oder ein Messtaster eines taktilen Abstandssensors ausgerichtet sein.

Fig. 3 (a) zeigt den Abstandssensor 8 in einer ersten Konfiguration SC1 mit der ersten Abstandssensorposition und dem ersten Abstandssensorwinkel. Der erste Abstand zu einer Oberflächenposition 31 auf der Oberfläche des Werkstücks 2 wird gemessen. Aus der ersten Abstandssensorposition und dem ersten Abstandssensorwinkel der ersten Konfiguration SC1 sowie dem ersten Abstand wird ein erster Koordinatensatz der Oberflächenposition 31 berechnet. Ein erstes Vertrauensniveau CL1 wird bestimmt.

Die Oberflächenposition 31 in Fig. 3 (a) ist an einer Flanke der Oberfläche des Werkstücks 2, das eine zahnradähnliche Form aufweist. Daher wird der Abstand zwischen der Oberflächenposition 31 und dem Abstandssensor 8 unter einem großen Winkel zur Oberfläche des Werkstücks 2 an der Oberflächenposition 31 gemessen. Dadurch besteht das Risiko, dass die Messung des Abstands nicht zuverlässig ist, und das erste Vertrauensniveau klein.

Fig. 3 (b) zeigt den Abstandssensor 8 in einer zweiten Konfiguration SC2 mit der zweiten Abstandssensorposition und dem zweiten Abstandssensorwinkel. Die Verschiebeelemente 21 und 22 und das Drehelement 23 wurden so eingestellt, dass ein zweiter Abstand zwischen der Oberflächenposition 31 und dem Abstandssensor 8 nun im Wesentlichen senkrecht zur Oberfläche des Werkstücks 2 an der Oberflächenposition 31 gemessen wird. Dadurch ist die Messung des zweiten Abstands zuverlässig, und das zweite Vertrauensniveau CL2 ist hoch. Aus der zweiten Abstandssensorposition und dem zweiten Abstandssensorwinkel der zweiten Konfiguration SC2 sowie dem zweiten Abstand wird ein zweiter Koordinatensatz der Oberflächenposition 31 berechnet.

Fig. 3 (c) zeigt einen Blick seitlich auf das Werkstück 2 und den Abstandssensor 8, d.h. die Blickrichtung ist entlang der Richtung A. Der Abstandssensor ist im Drehelement 23 um die Achse C gedreht. So kann der Abstand zu einer Oberflächenposition 32 auf der Oberfläche des Werkstücks 2 gemessen werden, wobei sich die Oberflächenposition 32 an der Unterseite eines Bereichs des Werkstücks 2 befindet.

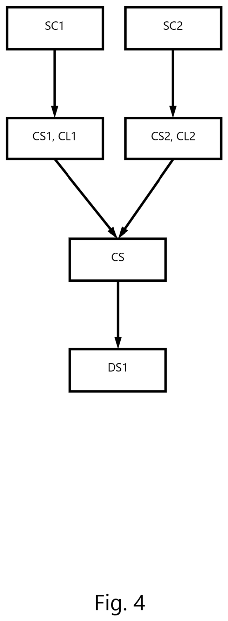

Fig. 4 zeigt das erfindungsgemäße Verfahren in einem Ablaufplan. In der Konfiguration SC1 des Abstandssensors 8 wird ein erster Koordinatensatz CS1 generiert. Der erste Koordinatensatz CS1 enthält Koordinaten der Oberflächenposition 31, die aus der ersten Abstandssensorposition und dem ersten Abstandssensorwinkel sowie dem ersten Abstand berechnet wurden. Der erste Koordinatensatz CS1 weist ein erstes Vertrauensniveau CL1 auf.

In der Konfiguration SC2 des Abstandssensors 8 wird ein zweiter Koordinatensatz CS2 generiert. Der zweite Koordinatensatz CS2 enthält Koordinaten der Oberflächenposition 31, die aus der zweiten Abstandssensorposition und dem zweiten Abstandssensorwinkel sowie dem zweiten Abstand berechnet wurden. Der zweite Koordinatensatz CS2 weist ein zweites Vertrauensniveau CL2 auf.

Der erste Koordinatensatz CS1 und der zweite Koordinatensatz CS2 werden zu einem ersten Datensatz DS1 kombiniert. Hierzu wird ein gemittelter Koordinatensatz CS als gewichtete Mittelwert aus CS1 und CS2 berechnet, wobei das Vertrauensniveau CL1 und das Vertrauensniveau CL2 als jeweiliger Wichtungsfaktor eingehen. Der gemittelte Koordinatensatz CS geht in den ersten Datensatz DS1 ein.

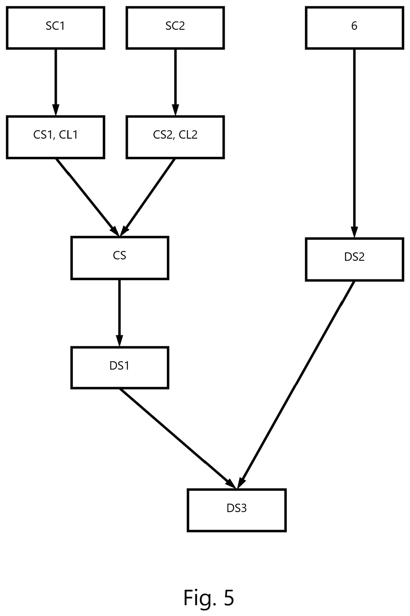

Fig. 5 zeigt das erfindungsgemäße Verfahren mit einem zusätzlichen Aufnehmen eines Schattenbilds mit der Sensoreinheit 6. Die Beleuchtungseinheit 7 beleuchtet das Werkstück 2, und die Sensoreinheit 6 nimmt ein Schattenbild des Werkstücks 2 auf. Aus dem Schattenbild wird ein zweiter Datensatz DS2 generiert. Der zweite Datensatz DS2 enthält Information über Form, Lage oder Dimension des Werkstücks 2, die aus dem Schattenbild berechenbar sind, beispielsweise den Durchmesser des Werkstücks 2.

Die Berechnung des ersten Datensatzes DS1 erfolgt gemäß der Beschreibung von Fig. 4.

Der erste Datensatz DS1 und der zweite Datensatz DS2 werden zu einem dritten Datensatz DS3 kombiniert. Somit umfasst der dritte Datensatz DS3:
- mindestens ein Merkmal von Form, Lage oder Dimension des Werkstücks 2, das aus dem von der Sensoreinheit 6 aufgenommenen Schattenbild berechnet wurde, beispielsweise ein Durchmesser des Werkstücks 2 aus einem Schattenbild
- und mindestens ein Merkmal von Form, Lage oder Dimension des Werkstücks 2, das aus mindestens zwei Abstandsmessungen mit dem Abstandssensor 8 als gewichteter Mittelwert berechnet wurde, beispielsweise eine Oberflächenposition 31 auf der Oberfläche des Werkstücks 2.

Das erfindungsgemäße Verfahren ist nicht auf die gezeigten Ausführungsbeispiele beschränkt.

## Patentansprüche

1. Verfahren zum Messen von mindestens einem Merkmal von Form, Lage oder Dimension eines drehbar eingespannten Werkstücks (2), umfassend:
Bereitstellen eines Abstandssensors (8), wobei der Abstandssensor (8) in mindestens einer Richtung in eine Abstandssensorposition verschiebbar und/oder um mindestens eine Achse in einen Abstandssensorwinkel drehbar ist;
Konfigurieren des verschiebbaren und/oder drehbaren Abstandssensors (8) in einer ersten Konfiguration (SC1), wobei die erste Konfiguration (SC1) eine erste Abstandssensorposition und einen ersten Abstandssensorwinkel des Abstandssensors (8) umfasst;
Messen eines ersten Abstands zwischen dem Abstandssensor (8) und einer Oberflächenposition (31) auf der Oberfläche des Werkstücks (2) mit der ersten Konfiguration (SC1) des Abstandssensors (8);
Berechnen eines ersten Koordinatensatzes (CS1) der Oberflächenposition (31) aus der ersten Konfiguration (SC1) und dem ersten Abstand;
Bestimmen eines ersten Vertrauensniveaus (CL1);
Konfigurieren des verschiebbaren und/oder drehbaren Abstandssensors (2) in einer zweiten Konfiguration (SC2), wobei die zweite Konfiguration (SC2) eine zweite Abstandssensorposition und einen zweiten Abstandssensorwinkel des Abstandssensors (8) umfasst und wobei sich die zweite Konfiguration (SC2) von der ersten Konfiguration (SC1) unterscheidet;
Messen eines zweiten Abstands zwischen dem Abstandssensor (8) und der Oberflächenposition (31) auf der Oberfläche des Werkstücks (2) mit der zweiten Konfiguration (SC2) des Abstandssensors (8);
Berechnen eines zweiten Koordinatensatzes (CS2) der Oberflächenposition (31) aus der zweiten Konfiguration (SC2) und dem zweiten Abstand;
Bestimmen eines zweiten Vertrauensniveaus (CL2);
Generieren eines ersten Datensatzes (DS1), der das mindestens eine Merkmal von Form, Lage oder Dimension des Werkstücks (2) beschreibt, umfassend einen gemittelten Koordinatensatz (CS) der Oberflächenposition (31),
wobei ein Berechnen des gemittelten Koordinatensatzes (CS) unter Verwendung des ersten Koordinatensatzes (CS1), des ersten Vertrauensniveaus (CL1), des zweiten Koordinatensatzes (CS2) und des zweiten Vertrauensniveaus (CL2) erfolgt.

2. Verfahren nach Anspruch 1 mit Berechnen des gemittelten Koordinatensatzes (CS) als ein gewichteter Mittelwert von erstem Koordinatensatz (CS1) und zweitem Koordinatensatz (CS2), wobei in das Berechnen des gewichteten Mittelwerts das erste Vertrauensniveau (CL1) und das zweite Vertrauensniveau (CL2) als jeweiliger Wichtungsfaktor eingehen.

3. Verfahren nach Anspruch 1, wobei der gemittelte Koordinatensatz (CS) der erste Koordinatensatz (CS1) ist, wenn das Vertrauensniveau (CL1) des ersten Koordinatensatz (CS1) größer als das Vertrauensniveau (CL2) des zweiten Koordinatensatzes (CS2) ist, und der gemittelte Koordinatensatz (CS) der zweite Koordinatensatz (CS2) ist, wenn das Vertrauensniveau (CL2) des zweiten Koordinatensatz (CS2) größer als das Vertrauensniveau (CL1) des ersten Koordinatensatzes (CS1) ist.

4. Verfahren nach einem der vorangegangenen Ansprüche, außerdem umfassend:
Konfigurieren des verschiebbaren und/oder drehbaren Abstandssensors (8) in mindestens einer weiteren Konfiguration, wobei die jeweilige Konfiguration eine geänderte Abstandssensorposition und/oder einen geänderten Abstandssensorwinkel des Abstandssensors (8) umfasst;
Messen eines jeweiligen Abstands zwischen dem Abstandssensor (8) und der Oberflächenposition (31) auf der Oberfläche des Werkstücks (2) mit der jeweiligen Konfiguration des Abstandssensors (8);
Berechnen eines jeweiligen Koordinatensatzes der Oberflächenposition (31) aus der jeweiligen Konfiguration und dem jeweiligen Abstand;
Bestimmen eines jeweiligen Vertrauensniveaus;
Generieren des ersten Datensatzes (DS1) unter zusätzlicher Berücksichtigung des jeweiligen Koordinatensatzes und des jeweiligen Vertrauensniveaus;

5. Verfahren nach einem der vorangegangenen Ansprüche, außerdem umfassend ein Wiederholen der jeweiligen Verfahrensschritte für mindestens eine weitere Oberflächenposition auf der Oberfläche des Werkstücks (2).

6. Verfahren nach einem der vorangegangenen Ansprüche, außerdem umfassend Drehen des Werkstücks (2) um eine Drehachse des drehbar eingespannten Werkstücks (2) und/oder Verschieben des Abstandssensors (8) in einer Richtung entlang der Drehachse.

7. Verfahren nach einem der vorangegangenen Ansprüche, wobei der Abstandssensor (8) eine kontaktlose Messung des Abstands, insbesondere eine optische, akustische oder pneumatische Messung des Abstands, oder eine taktile Messung des Abstands ausführt.

8. Verfahren nach einem der vorangegangenen Ansprüche, zusätzlich umfassend:
Beleuchten des Werkstücks (2) mit einer Beleuchtungseinheit (7);
mindestens einfaches Aufnehmen eines von der Beleuchtungseinheit (7) erzeugten Schattenbilds des Werkstücks (2) mit einer Sensoreinheit (6);
Generieren eines zweiten Datensatzes (DS2) aus dem mindestens einfachen Aufnehmen des Schattenbilds;
Kombinieren des ersten Datensatzes (DS1) und des zweiten Datensatzes (DS2) zu einem dritten Datensatz (DS3), wobei der dritte Datensatz (DS3) das mindestens eine Merkmal von Form, Lage oder Dimension des Werkstücks (2) beschreibt.

9. Verfahren nach Anspruch 8,
wobei das Werkstück (2) eine Referenzposition umfasst,
wobei die Referenzposition als Schattenbild von der Sensoreinheit (6) aufgenommenen wird und die Referenzposition als die Oberflächenposition (31) selektiert wird,
zusätzlich umfassend ein Berechnen einer Relation von Abstandssensor (8) und Sensoreinheit (6) aus dem im dritten Datensatz (DS3) beschriebenen mindestens einen Merkmal von Form, Lage oder Dimension des Werkstücks (2).

10. Vorrichtung zum Messen von mindestens einem Merkmal von Form, Lage oder Dimension eines drehbar eingespannten Werkstücks (2), umfassend einen verschiebbaren und/oder drehbaren Abstandssensor (8) und eine Steuereinheit (24), auf der das Verfahren nach einem der vorangegangenen Ansprüche ausführbar ist.

11. Vorrichtung nach Anspruch 10, zusätzlich umfassend eine Beleuchtungseinheit (7) und eine Sensoreinheit (6).
